# DEMANDE DE BREVET EUROPEEN

(11) **EP 1 418 698 A1**
(43) Date de publication de la demande: **12.05.2004**
(21) Numéro de dépôt: 03292754.3
(22) Date de dépôt: 04.11.2003
(51) Int. Cl.: H04L 1/16

(54) **Procédé de transmission de données en mode acquitté**

(30) Priorité: 08.11.2002 FR 0214029
(71) Demandeur: Nortel Networks Limited, St. Laurent, Quebec H4S 2A9 (CA)
(72) Inventeur: Baudry, Benjamin, 92190 Meudon (FR); Isnard, Olivier, 78220 Viroflay (FR)
(74) Mandataire: Loisel, Bertrand

(57) **Abrégé**

L'unité émettrice (30) produit une séquence de blocs comportant chacun des données à transmettre et un en-tête, qu'elle émet vers une unité réceptrice (31). L'en-tête de chaque bloc comporte un champ de contrôle d'acquittement activé de manière intermittente pour requérir un acquittement de blocs de la part de l'unité réceptrice. On active le champ de contrôle d'acquittement de certains blocs de la séquence conformément à un mode de déclenchement prédéterminé, et on répète l'activation du champ de contrôle d'acquittement d'au moins un bloc de la séquence émis après un bloc où le champ de contrôle d'acquittement a été activé conformément au mode de déclenchement prédéterminé.

## Description

La présente invention concerne les techniques de transmission de données en mode acquitté depuis une unité émettrice vers une unité réceptrice.

L'invention concerne plus particulièrement, parmi ces techniques, celles dans lesquelles l'unité émettrice, qui produit une séquence de blocs comportant chacun un en-tête en plus des données d'utilisateur, utilise un mécanisme de "polling" pour requérir des acquittements de blocs de la part de l'unité réceptrice. L'en-tête de chaque bloc comporte alors un champ de contrôle d'acquittement activé de façon intermittente par l'unité émettrice pour requérir un acquittement de blocs de la part de l'unité réceptrice. En réponse à une telle requête, l'unité réceptrice retourne un message dans lequel un certain nombre de blocs précédents sont acquittés, positivement et/ou négativement.

Une technique de ce genre est utilisée, en particulier, dans les réseaux de troisième génération.

Souvent, le mécanisme d'acquittement est utilisé dans le cadre d'un protocole de demande à répétition automatique (ARQ, "Automatic Repeat reQuest") dans lequel l'unité émettrice des blocs attend un acquittement positif avant de transmettre les données suivantes. Un tel protocole peut de plus appartenir à la classe des protocoles à fenêtre d'anticipation ("sliding window") pour se doter d'une méthode de contrôle du flux transmis. Les blocs émis sont pour cela munis d'un numéro de séquence, et l'unité émettrice détient la liste des numéros de séquences des blocs envoyés mais non encore acquittés ainsi que celle des numéros de séquences de blocs qu'elle peut envoyer. La borne inférieure de la fenêtre est décalée lorsqu'un acquittement positif de données émises est reçu par l'unité émettrice, par exemple de façon à indiquer le numéro de séquence le plus petit parmi ceux des blocs non encore acquittés. Si un message de requête d'acquittement n'a pas été correctement reçu par l'unité réceptrice, la fenêtre d'anticipation de l'unité émettrice peut rester bloquée à une position ancienne, ce qui peut conduire à des répétitions inutiles de blocs déjà reçus et à des retards significatifs dans la transmission de nouvelles données.

Pour réduire le risque d'un tel blocage de la fenêtre d'anticipation, on peut augmenter le niveau de protection des blocs transportant les messages de requête d'acquittement ou bien, à l'intérieur de ces blocs, des informations transportant la requête d'acquittement, afin de diminuer le taux de réception incorrecte de ces requêtes. Un tel procédé est décrit notamment dans la demande WO 02/069548.

Un but de la présente invention est de proposer un procédé efficace de transmission de données en mode paquet.

Un autre but est de réduire les risques de blocage des fenêtres d'émission utilisées dans certains mécanismes ARQ.

L'invention propose ainsi un procédé de transmission de données en mode acquitté entre une unité émettrice et une unité réceptrice, dans lequel l'unité émettrice émet à destination de l'unité réceptrice une séquence de blocs comportant chacun un en-tête et des données à transmettre. L'en-tête de chaque bloc comporte un champ de contrôle d'acquittement activé de façon intermittente par l'unité émettrice pour requérir un acquittement de blocs de la part de l'unité réceptrice. Selon l'invention, on active le champ de contrôle d'acquittement de certains blocs de la séquence conformément à un mode de déclenchement prédéterminé, et on répète l'activation du champ de contrôle d'acquittement d'au moins un bloc de la séquence émis après un bloc où le champ de contrôle d'acquittement a été activé conformément au mode de déclenchement prédéterminé.

L'invention peut en outre être mise en oeuvre selon un procédé dans lequel l'activation du champ de contrôle d'acquittement de blocs de la séquence conformément au mode de déclenchement prédéterminé est effectuée à intervalles de temps réguliers. On peut aussi répéter l'activation du champ de contrôle d'acquittement de N blocs (N étant un nombre au moins égal à 1) consécutifs de la séquence émis juste après un tel bloc où le champ de contrôle d'acquittement a été activé conformément au mode de déclenchement prédéterminé, les N blocs pouvant par ailleurs être émis vers l'unité réceptrice à intervalles de temps réguliers.

Par ailleurs, le mode de mise en oeuvre de l'invention peut prévoir que la durée pendant laquelle ces N blocs sont émis est sensiblement plus courte que les intervalles de temps entre les émissions de blocs où le champ de contrôle d'acquittement est activé conformément au mode de déclenchement prédéterminé. Ainsi, la transmission d'une requête d'acquittement est protégée par un mécanisme de répétition en nombre limité de cette requête. La durée pendant laquelle les répétitions sont émises peut être ajustée de manière à ne pas occuper trop longtemps la bande passante du système avec des messages de supervision de la liaison.

Dans une réalisation de l'invention, un traitement particulier des blocs reçus ayant le champ de contrôle activé est appliqué par l'unité réceptrice afin d'éviter l'envoi d'informations d'acquittement redondantes.

Dans un premier mode de réalisation, on commande l'unité réceptrice pour qu'après avoir reçu un premier bloc de la séquence ayant le champ de contrôle activé, elle ne tienne pas compte de l'activation éventuelle du champ de contrôle d'acquittement d'un autre bloc de la séquence reçu dans une période de durée prédéterminée après le premier bloc.

Une autre possibilité consiste à commander l'unité réceptrice pour qu'après avoir retourné des informations d'acquittement en réponse à la réception d'un premier bloc de la séquence ayant le champ de contrôle d'acquittement activé, elle inhibe l'envoi d'informations d'acquittement dans une période de durée prédéterminée après le premier bloc de la séquence.

Avantageusement, on peut de plus prévoir que cette durée prédéterminée corresponde sensiblement à N fois un intervalle de temps séparant les émissions de deux blocs consécutifs de la séquence lorsqu'on choisit de répéter l'activation du champ de contrôle d'acquittement de N blocs (N > 1) consécutifs de la séquence émis juste après un bloc où le champ de contrôle d'acquittement a été activé conformément au mode de déclenchement prédéterminé.

La présente invention a en outre pour objet une unité de transmission de données en mode acquitté, comprenant des moyens de production d'au moins une séquence de blocs comportant chacun des données à transmettre et un en-tête incluant un champ de contrôle d'acquittement, des moyens pour émettre les blocs de la séquence vers une unité réceptrice, et des moyens d'activation intermittente du champ de contrôle d'acquittement dans l'en-tête des blocs de la séquence pour requérir un acquittement de blocs de la part de l'unité réceptrice. Les moyens d'activation intermittente comprennent des premiers moyens pour activer le champ de contrôle d'acquittement de certains blocs de la séquence conformément à un mode de déclenchement prédéterminé, et des seconds moyens pour répéter l'activation du champ de contrôle d'acquittement d'au moins un bloc de la séquence émis après un bloc où le champ de contrôle d'acquittement a été activé par les premiers moyens.

Ces premiers moyens peuvent en outre être agencés pour activer à intervalles de temps réguliers le champ de contrôle d'acquittement de blocs de la séquence. Les seconds moyens peuvent aussi avantageusement être agencés pour activer le champ de contrôle d'acquittement de N blocs consécutifs de la séquence émis juste après le bloc où le champ de contrôle d'acquittement a été activé par les premiers moyens, N étant un nombre au moins égal à 1, les N blocs pouvant être émis vers l'unité réceptrice à intervalles de temps réguliers lorsque N>1. Dans ce dernier cas, on peut prévoir que la durée pendant laquelle les N blocs sont émis est.sensiblement plus courte que les intervalles de temps entre les émissions de blocs où le champ de contrôle d'acquittement est activé par les premiers moyens.

D'autres particularités et avantages de la présente invention apparaîtront dans la description ci-après d'exemples de réalisation non limitatifs, en référence aux dessins annexés, dans lesquels :
- la figure 1 est un schéma d'un réseau UMTS auquel l'invention peut s'appliquer ;
- la figure 2 est un diagramme montrant l'organisation en couches de protocoles de communication employés sur l'interface radio du réseau UMTS ;
- la figure 3 est un diagramme d'échange d'unités de protocole illustrant une mise en oeuvre de l'invention ;
- la figure 4 est un diagramme d'échange d'unités de protocole illustrant une mise en oeuvre de l'invention ;
- la figure 5 est un schéma d'une unité de transmission de données selon l'invention.

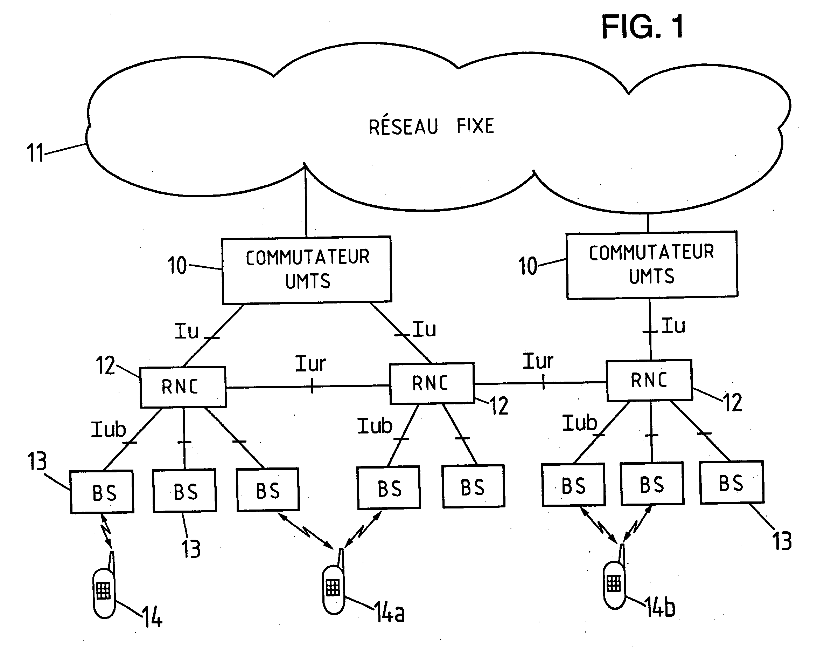

L'invention est décrite ci-après dans son application non limitative à un réseau UMTS fonctionnant en mode FDD (duplex à partage fréquentiel). La figure 1 montre l'architecture d'un tel réseau UMTS.

Les commutateurs du service mobile 10, appartenant un coeur de réseau (CN, « Core Network »), sont reliés d'une part à un ou plusieurs réseaux fixes 11 et d'autre part, au moyen d'une interface dite *lu,* à des équipements de contrôle 12, ou RNC (« Radio Network Controller »). Chaque RNC 12 est relié à une ou plusieurs stations de base 13 au moyen d'une interface dite *lub.* Les stations de base 13, réparties sur le territoire de couverture du réseau, sont capables de communiquer par radio avec les terminaux mobiles 14, 14a, 14b appelés UE (« UMTS Equipment »). Les stations de base peuvent être regroupées pour former des noeuds appelés « node B ». Certains RNC 12 peuvent en outre communiquer entre eux au moyen d'une interface dite *lur.* Les RNC et les stations de base forment un réseau d'accès appelé UTRAN (« UMTS Terrestrial Radio Access Network »).

L'UTRAN comporte des éléments des couches 1 et 2 du modèle ISO en vue de fournir les liaisons requises sur l'interface radio (appelée Uu), et un étage 15A de contrôle des ressources radio (RRC, « Radio Resource Control ») appartenant à la couche 3, ainsi qu'il est décrit dans la spécification technique 3G TS 25.301, « Radio Interface Protocol Architecture», version 3.9.0 publiée en décembre 2001 par le 3GPP (3^{rd} Generation Partnership Project). Vu des couches supérieures, l'UTRAN agit simplement comme relais entre l'UE et le CN.

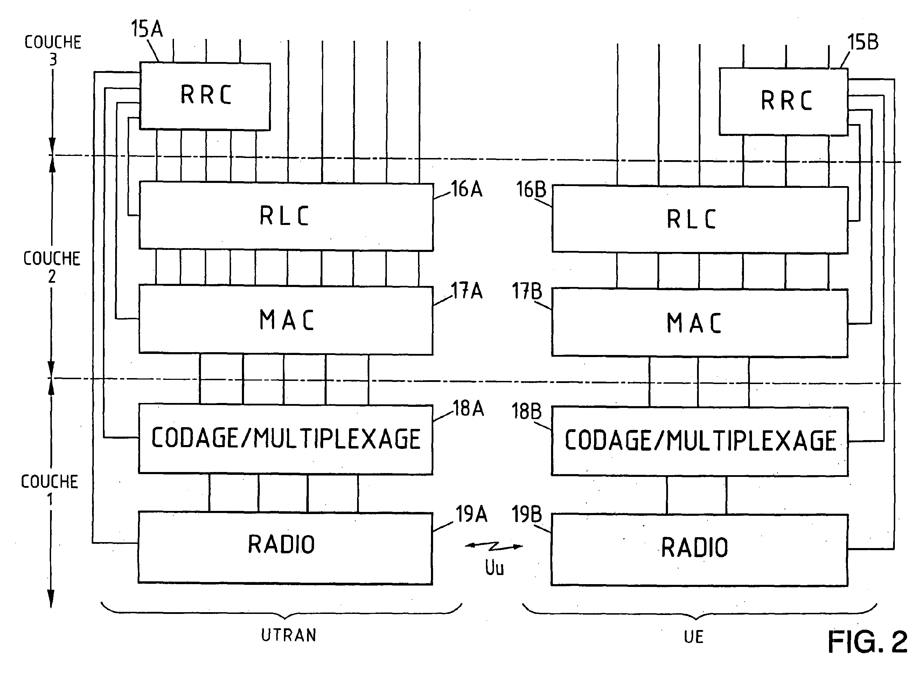

La figure 2 montre les étages RRC 15A, 15B et les étages des couches inférieures qui appartiennent à l'UTRAN et à un UE. De chaque côté, la couche 2 est subdivisée en un étage 16A, 16B de contrôle de liaison radio (RLC, « Radio Link Control ») et un étage 17A, 17B de contrôle d'accès au médium (MAC, « Medium Access Control »). La couche 1 comprend un étage 18A, 18B de codage et de multiplexage. Un étage radio 19A, 19B assure l'émission des signaux radio à partir des trains de symboles fournis par l'étage 18A, 18B, et la réception des signaux dans l'autre sens.

Il existe différentes façons d'adapter l'architecture de protocoles selon la figure 2 à l'architecture matérielle de l'UTRAN selon la figure 1, et en général différentes organisations peuvent être adoptées selon les types de canaux (voir section 11.2 de la spécification technique 3G TS 25.401, « UTRAN Overall Description », version 3.1.0 publiée en janvier 2000 par le 3GPP). Les étages RRC, RLC et MAC se trouvent typiquement dans le RNC 12. Lorsque plusieurs RNC sont impliqués, la sous-couche MAC peut être répartie entre ces RNC, avec des protocoles appropriés pour les échanges sur l'interface lur, par exemple ATM (« Asynchronous Transfer Mode ») et AAL2 (« ATM Adaptation Layer No. 2 »). Ces mêmes protocoles peuvent également être employés sur l'interface *lub* pour les échanges entre la sous-couche MAC et la couche 1.

Les couches 1 et 2 sont chacune contrôlées par la sous-couche RRC, dont les caractéristiques sont décrites dans la spécification technique 3G TS 25.331, « RRC Protocol Specification », version 3.1.0 publiée en octobre 1999 par le 3GPP. L'étage RRC 15A, 15B supervise l'interface radio. Il traite en outre des flux à transmettre à l'unité distante selon un « plan de contrôle », par opposition au « plan d'utilisateur » qui correspond au traitement des données d'utilisateur issues de la couche 3.

La sous-couche RLC est décrite dans la spécification technique 3G TS 25.322, « RLC Protocol Spécification », version 3.9.0 publiée en décembre 2001 par le 3GPP. Dans le sens de l'émission, l'étage RLC 16A, 16B reçoit, suivant des canaux logiques respectifs, des flux de données constitués d'unités de données de service (RLC-SDU) issues de la couche 3. Un module RLC de l'étage 16A, 16B est associé à chaque canal logique pour effectuer notamment une segmentation des unités RLC-SDU du flux en blocs, ou unités de données de protocole (PDU, "Packet Data Units") adressées à la sous-couche MAC et comprenant un en-tête RLC. Dans le sens de la réception, un module RLC effectue inversement un réassemblage des unités RLC-SDU du canal logique à partir des blocs reçus de la sous-couche MAC.

Selon les canaux logiques et sous le contrôle de l'étage RRC, la sous-couche RLC peut rendre un service de transfert en mode transparent, en mode acquitté ou en mode non-acquitté. Un mécanisme d'acquittement fondé sur des numéros de séquence des blocs émis est prévu en mode acquitté. On distingue deux types de blocs unités de protocole de la sous-couche RLC : les blocs de transfert d'information ("data PDUs") et, pour le mode acquitté uniquement, les blocs de commande ("control PDUs"). Parmi ces derniers, le bloc de commande "STATUS" permet notamment à l'entité réceptrice d'indiquer à l'entité émettrice les biocs de transfert d'information qui ont été correctement reçus et ceux qui ont été perdus lors de la transmission.

L'entité réceptrice émet en effet sur requête ou spontanément des compte-rendu de supervision ("status reports") vers l'unité émettrice constitués d'un ou de plusieurs blocs de commande "STATUS". Une fonction de contrôle d'acquittement permet de commander le déclenchement de l'activation d'une requête d'acquittement selon un ou plusieurs modes prédéterminés. Le standard prévoit actuellement plusieurs modes d'activation, chacun étant défini par une condition particulière de déclenchement. La condition de déclenchement peut par exemple consister en l'expiration d'un temporisateur de périodicité de requêtes de compte-rendu de supervision ("Timer_Poll_Periodic"), de manière à déclencher l'envoi périodique vers l'unité réceptrice d'une requête de compte-rendu.

Chaque bloc de transfert d'information en mode acquitté ("AMD PDU") comporte un champ en-tête et un champ de données à transmettre. L'en-tête de chaque bloc comporte un champ de contrôle d'acquittement, consistant en un bit dit bit de polling ("Polling bit"), qui peut être activé pour requérir un compte-rendu de réception de blocs de la part de la sous-couche RLC de l'unité réceptrice. La requête est ainsi émise en positionnant à 1 ce bit de polling.

La sous-couche MAC est décrite dans la spécification technique 3G TS 25.321, « MAC Protocol Specification », version 3.1.0 publiée en octobre 1999 par le 3GPP. Elle transpose un ou plusieurs canaux logiques sur un ou plusieurs canaux de transport TrCH (« Transport CHannel »). Dans le sens de l'émission, l'étage MAC 17A, 17B peut multiplexer un ou plusieurs canaux logiques dans un même canal de transport. Sur un tel canal de transport, l'étage MAC 17A, 17B délivre des blocs de transport successifs TrBk (« Transport Block ») consistant chacun en un en-tête MAC optionnel et une unité RLC-PDU issue d'un canal logique associé.

Pour chaque TrCH, la sous-couche RRC fournit à la sous-couche MAC un ensemble de formats de transport (TFS, « Transport Format Set »). Un format de transport comprend un intervalle de temps de transmission TTI (« Transmission Time Interval ») égal à 10, 20, 40 ou 80 ms, une taille de bloc de transport, une taille d'ensemble de blocs de transport et des paramètres définissant le schéma de protection à appliquer dans le TrCH par la couche 1 pour détecter et corriger les erreurs de transmission. En fonction du débit courant sur le ou les canaux logiques associés au TrCH, l'étage MAC 17A, 17B sélectionne un format de transport dans le TFS assigné par la sous-couche RRC, et il délivre dans chaque TTI un ensemble de blocs de transport conformément au format sélectionné, en indiquant ce format à la couche 1.

Les blocs de transfert d'information en mode acquitté AMD PDU sont numérotés par un numéro de séquence entier, noté SN ("Sequence Number"). L'entité RLC de l'unité émettrice tient à jour un ensemble de variables d'état, parmi lesquelles :
- une variable d'état d'acquittement VT(A) ("Acknowledge state Variable") qui indique le numéro de séquence qui suit immédiatement le numéro de séquence du dernier bloc AMD PDU acquitté. La variable VT(A) pointe ainsi vers la borne inférieure courante d'une fenêtre d'émission. Sa mise à jour s'effectue sur réception d'un acquittement.
- une variable d'état de taille de fenêtre d'émission VT(WS) ("Transmission Window state variable") ;
- une variable d'état d'émission VT(MS) ("Maximum Send state variable"), dont la valeur représente la borne supérieure de la fenêtre d'émission et est déterminée selon la relation VT(MS) = VT(A) + VT(WS).

La fenêtre d'émission permet de contrôler l'émission de blocs d'une séquence dont les précédents n'ont pas encore été acquittés par l'unité réceptrice. Dans la plupart des cas, l'entité RLC d'émission s'interdira de transmettre des blocs dont le numéro de séquence excède la valeur courante VT(MS). La variable d'état d'acquittement étant mise à jour sur réception de l'acquittement d'un bloc de numéro de séquence déterminé, la perte d'une ou de plusieurs requêtes de compte-rendu de supervision peut conduire au blocage de la fenêtre d'émission, alors même que les données correspondantes ont été correctement reçues par l'unité réceptrice sans que l'acquittement de ces dernières puisse être émis en l'absence de requête de compte-rendu de supervision.

Selon un mode préféré de réalisation de l'invention, il est proposé de transmettre vers l'unité réceptrice, outre la requête de compte-rendu générée en réponse à la réalisation d'une condition de déclenchement de la fonction de contrôle d'acquittement, au moins une répétition de cette requête. Ces répétitions de requête, lorsqu'elles sont multiples, sont transmises à une cadence sensiblement supérieure à celle des requêtes générées en réponse à la réalisation d'une condition de déclenchement de la fonction de contrôle d'acquittement. Dans un système UMTS, la transmission des répétitions multiples est de préférence effectuée à intervalles réguliers, correspondant typiquement à un intervalle TTI. La transmission des répétitions de requête sur des blocs successifs au sein d'un même intervalle TTI en limiterait en effet probablement l'efficacité. La simple présence d'évanouissements sur le canal de transmission entraînerait non seulement la perte du bloc transportant la requête, mais aussi celle des blocs suivants et donc des répétitions de requête.

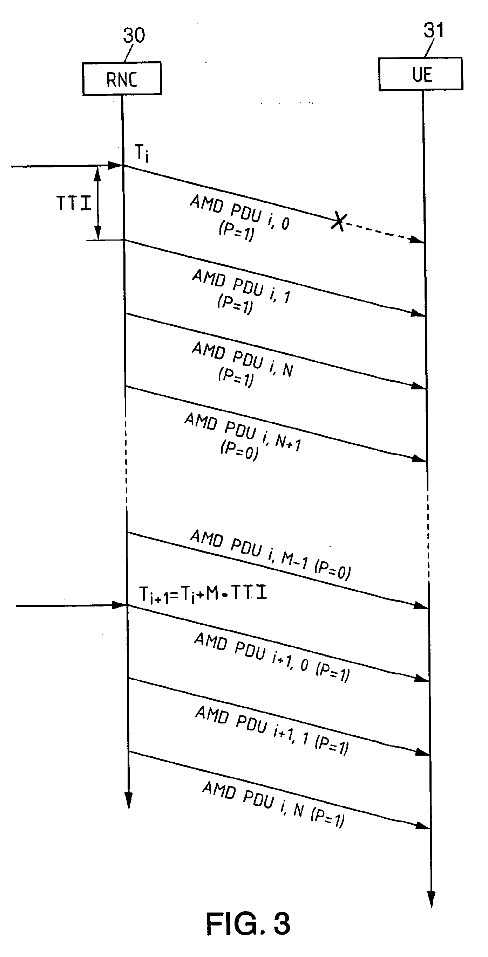

La figure 3 illustre un mécanisme selon l'invention entre les entités RLC d'une unité émettrice 30 et d'une unité réceptrice 31. L'unité émettrice pourra être celle d'un contrôleur RNC dans le cas de l'UMTS, et l'unité réceptrice celle d'un UE. L'axe temporel relatif à l'unité émettrice 30 est divisé selon un intervalle, régulier dans l'exemple illustré, qui peut correspondre à un intervalle de transmission TTI. La condition de déclenchement de la fonction de contrôle d'acquittement de l'unité émettrice 30 est configurée de manière à ce que le déclenchement de la fonction ait lieu à un instant Tᵢ₊₁ = Tᵢ + M×TTI espacé de M×TTI par rapport au précédent déclenchement intervenu à l'instant Tᵢ. A l'instant Tᵢ, une requête de compte-rendu de supervision est donc émise vers l'unité réceptrice (bloc AMD PDU i,0 dont le bit P est positionné à 1). La figure 3 illustre le cas où cette requête n'est pas reçue par l'unité réceptrice, et ne donne donc pas lieu à l'envoi d'un compte-rendu de supervision par l'unité réceptrice. Selon l'invention, N (dans l'exemple, N = 2 < M) répétitions de la requête du bloc AMD PDU i,0 (blocs AMD PDU i,1 et i,N) sont émises, pour pallier la perte éventuelle du bloc AMD PDU i,0 ou des N-1 blocs AMD PDU i,1...N-1. Ces répétitions sont émises au rythme d'une par intervalle TTI. Les blocs AMD PDU i,N+1 à AMD PDU i,M-1 émis aux instants Tᵢ + (N+1)×TTI à Tᵢ + (M-1 )×TTI ont quant à eux un bit de polling positionné à zéro (P = 0). La figure 3 illustre ainsi l'émission de blocs AMD PDU i,j à chaque intervalle TTI, l'indice i correspondant à l'intervalle de temps entre les instants Ti et Ti + (M-1) × TTI durant lequel M blocs sont émis, et l'indice j illustrant les valeurs prises par un compteur de ces M blocs remis à zéro à chaque bloc émis suite au déclenchement de la fonction de contrôle d'acquittement.

A l'instant Tᵢ₊₁, le déclenchement de la fonction de contrôle d'acquittement se produit ce qui génère l'envoi d'une nouvelle requête vers l'unité réceptrice (bloc AMD PDU i+1,0). Cette requête est aussi répétée N fois (le bit de polling des blocs AMD PDU i+1,1...N est positionné à 1).

La figure 3 illustre d'autre part le fait que M est choisi de préférence de manière à être sensiblement supérieur à N. Le choix du rapport N/M résulte d'un compromis visant à limiter efficacement le risque de blocage de fenêtre tout en évitant l'envoi de répétitions en trop grande quantité.

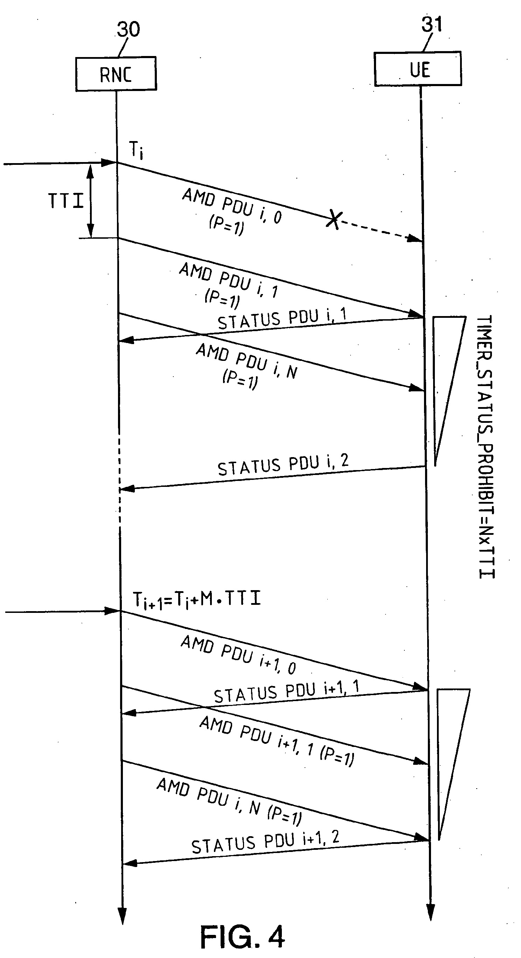

La figure 4 illustre un mode supplémentaire de réalisation de l'invention, dans lequel l'utilisation d'un temporisateur d'inhibition de compte-rendu permet d'éviter l'envoi d'un compte-rendu de supervision pour chacune des répétitions de requête. Le temporisateur d'inhibition de compte-rendu ("Timer_Status_Prohibit") permet d'inhiber l'envoi d'un ou de plusieurs comptes-rendus de supervision consécutifs par l'unité réceptrice. Ce temporisateur est armé lors de l'envoi du compte-rendu de supervision répondant à la première requête reçue par l'unité réceptrice, qu'il s'agisse de la requête déclenchée par la fonction de contrôle d'acquittement ou d'une des N répétitions de cette requête. De préférence, ce temporisateur est armé avec une valeur égale ou supérieure à N × TTI de manière à couvrir la durée maximale pendant laquelle des répétitions de requête sont susceptibles d'être reçues pas l'unité réceptrice. Un seul compte-rendu de supervision (STATUS PDU i,2) est généré à l'expiration du temporisateur, et ce quelque soit le nombre de requêtes reçues pendant son écoulement. De cette manière, un premier compte-rendu de supervision (STATUS PDU i,1) est envoyé en réponse à la réception de la première requête reçue, puis un second compte-rendu (STATUS PDU i,2) est envoyé sur expiration du temporisateur d'inhibition. La perte éventuelle d'un de ces deux comptes-rendus peut ainsi avantageusement être compensée.

Un temporisateur permettant d'ignorer totalement les requêtes reçues pourrait tout autant être utilisé, sans pour autant modifier la nature de la présente invention. De même que précédemment, ce temporisateur serait avantageusement armé avec une valeur égale ou supérieure à N × TTI lors de l'envoi du compte-rendu de supervision répondant à la première requête reçue par l'unité réceptrice, qu'il s'agisse de la requête déclenchée par la fonction de contrôle d'acquittement ou d'une des N répétitions de cette requête.

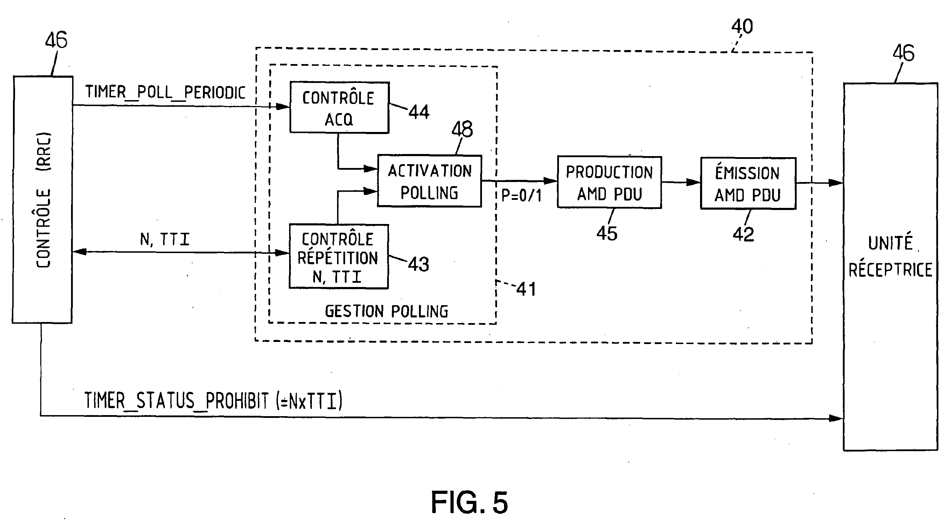

La figure 5 illustre certains moyens de l'unité émettrice (40) selon l'invention. Ces moyens relèvent de l'instance du protocole RLC en mode acquitté créé au RNC (cas d'une iiaison descendante) ou à l'UE (cas d'une liaison montante) pour supporter le transfert des blocs AMD PDU.

L'unité émettrice comprend un module (41) de gestion de requêtes de compte-rendu (polling) qui vient commander le positionnement du bit de polling au sein des blocs AMD PDU produits par le module de production (45) en vue d'être émis par le module (42) vers l'instance du protocole RLC créée au niveau de l'unité réceptrice (47). Le module (41) comprend un premier module (44) d'activation du bit de polling sur déclenchement, par exemple périodique selon le paramètre Timer_Poll_Periodic, de la fonction de contrôle d'acquittement ("polling trigger").

Des paramètres d'émission des répétitions de requêtes sont consignés dans un second module (43) d'activation du bit de polling pour répéter des requêtes d'acquittement. Ces paramètres comprennent, par exemple, le nombre N de répétitions et leur cadence (1 répétition par intervalle TTI). Ils peuvent être communiqués à l'instance de protocole RLC par la couche RRC, au moyen d'un module (46) de contrôle RRC qui configure le module (43).

Les paramètres précités pourraient aussi avantageusement être consignés dans une base de données par exemple de type MIB ("Management Information Base" - voir notamment la recommandation RFC 2737 de l'Internet Enigineering Task Force, publiée en décembre 1999), et être mis à jour par l'intermédiaire d'un système d'opération et de maintenance ("Operation and Maintenance system - O&M").

Les modules (43) et (44) viennent piloter un module (48) d'activation du bit de polling dans l'en-tête des blocs émis. Ce module (48) indique au module (45) la valeur du bit de polling. Il active le bit de polling (P = 1) pour chaque répétition conformément aux paramètres consignés dans le module (43), et suivant chaque activation requise par le module (44).

Pour la mise en oeuvre du procédé illustré sur la figure 4, l'unité de transmission comprend, dans un mode de réalisation de l'invention, des moyens (46) pour activer l'usage du temporisateur d'inhibition de compte-rendu ("Timer_Status_Prohibit") par l'unité réceptrice (47). Les procédures du protocole RRC comprennent des procédures de gestion des ressources radio décrites dans la section 8.2 de la spécification technique 3G TS 25.331 précitée. La configuration de ce temporisateur est ainsi pilotée par la couche RRC (module 46), au moyen de messages de configuration (messages "RADIO BEARER SETUP" ou "RADIO BEARER RECONFIGURATION") qui permettent de transmettre à l'unité réceptrice la valeur d'armement de ce temporisateur (unités d'information "RLC Info" et "Downlink RLC Status Info" décrites aux paragraphes 8.6.4.9, 10.3.4.23 et 10.3.4.1, respectivement).

Dans un mode alternatif de réalisation de l'invention, le module de contrôle (46) de la couche RRC commande l'unité réceptrice pour qu'elle ne tienne pas compte de requêtes de compte-rendu de supervision reçues pendant une durée prédéterminée suivant l'envoi du compte-rendu répondant à une première requête reçue.

Le déclenchement de la fonction de contrôle d'acquittement est commandé par la couche RRC, par le biais de la primitive "CRLC-Config-Req", décrite aux paragraphes 8.1 et 8.2 de la spécification 3G TS 25.322 précitée, ainsi qu'au paragraphe 5.1.1 de la spécification technique 3G TS 25.301 précitée. En particulier, la valeur du temporisateur "Timer_Poll_Periodic" de déclenchement périodique peut le cas échéant être définie par ce biais, ainsi qu'illustré sur la figure 5.

La spécification technique TS 25.322 permet l'émission de blocs AMD PDU qui ne contiennent pas de données à transmettre. Le champ de données de tels blocs contient des bits de remplissage. Le module (45) produit des blocs AMD PDU à partir des informations de supervision à transmettre (dont l'information d'activation le cas échéant du bit de polling) et de données à transmettre. Dans les situations où il n'y a plus aucune donnée à transmettre, mais où le module (43) commande l'envoi d'une répétition de requête d'acquittement, le module (45) peut certes générer un bloc AMD PDU dont le bit de polling est positionné à 1 et qui ne contient pas de données à transmettre. Il peut cependant avantageusement aussi générer un bloc AMD PDU dont le bit de polling est positionné à 1 et dont le champ de données reproduit celui du dernier bloc AMD PDU émis contenant des données à transmettre (n'ayant pas de préférence déjà été acquittées), ou bien simplement ignorer l'activation du bit de polling commandée par le module (43).

## Revendications

1. Procédé de transmission de données en mode acquitté entre une unité émettrice et une unité réceptrice, dans lequel l'unité émettrice émet à destination de l'unité réceptrice une séquence de blocs comportant chacun un en-tête et des données à transmettre, et dans lequel l'en-tête de chaque bloc comporte un champ de contrôle d'acquittement activé de façon intermittente par l'unité émettrice pour requérir un acquittement de blocs de la part de l'unité réceptrice, le procédé comprenant les étapes suivantes :
/a/ on active le champ de contrôle d'acquittement de certains blocs de la séquence conformément à un mode de déclenchement prédéterminé ; et
/b/ on répète l'activation du champ de contrôle d'acquittement d'au moins un bloc de la séquence émis après un bloc où le champ de contrôle d'acquittement a été activé à l'étape /a/.

2. Procédé selon la revendication 1, dans lequel l'étape /a/ comprend l'activation à intervalles de temps réguliers du champ de contrôle d'acquittement de blocs de la séquence.

3. Procédé selon la revendication 1 ou 2, dans lequel l'étape /b/ comprend la répétition de l'activation du champ de contrôle d'acquittement de N blocs consécutifs de la séquence émis juste après ledit bloc où le champ de contrôle d'acquittement a été activé à l'étape /a/, N étant un nombre au moins égal à 1.

4. Procédé selon la revendication 3, dans lequel N > 1 et lesdits N blocs sont émis vers l'unité réceptrice à intervalles de temps réguliers.

5. Procédé selon la revendication 4, dans lequel la durée pendant laquelle lesdits N blocs sont émis est sensiblement plus courte que les intervalles de temps entre les émissions de blocs où le champ de contrôle d'acquittement est activé à l'étape /a/.

6. Procédé selon l'une quelconque des revendications précédentes, dans lequel on commande l'unité réceptrice pour qu'après avoir reçu un premier bloc de la séquence ayant le champ de contrôle d'acquittement activé, elle ne tienne pas compte de l'activation éventuelle du champ de contrôle d'acquittement d'un autre bloc de la séquence reçu dans une période de durée prédéterminée après ledit premier bloc.

7. Procédé selon chacune des revendications 3 et 6, dans lequel ladite durée prédéterminée correspond sensiblement à N fois un intervalle de temps séparant les émissions de deux blocs consécutifs de la séquence.

8. Procédé selon l'une quelconque des revendications 1 à 5, dans lequel on commande l'unité réceptrice pour qu'après avoir retourné des informations d'acquittement en réponse à la réception d'un premier bloc de la séquence ayant le champ de contrôle d'acquittement activé, elle inhibe l'envoi d'informations d'acquittement dans une période de durée prédéterminée après ledit premier bloc de la séquence.

9. Procédé selon chacune des revendications 3 et 8, dans lequel ladite durée prédéterminée correspond sensiblement à N fois un intervalle de temps séparant les émissions de deux blocs consécutifs de la séquence.

10. Unité de transmission de données en mode acquitté, comprenant des moyens (45) de production d'au moins une séquence de blocs comportant chacun des données à transmettre et un en-tête incluant un champ de contrôle d'acquittement, des moyens (42) pour émettre les blocs de la séquence vers une unité réceptrice, et des moyens (41) d'activation intermittente du champ de contrôle d'acquittement dans l'en-tête des blocs de la séquence pour requérir un acquittement de blocs de la part de l'unité réceptrice, dans laquelle les moyens d'activation intermittente comprennent des premiers moyens (44, 48) pour activer le champ de contrôle d'acquittement de certains blocs de la séquence conformément à un mode de déclenchement prédéterminé, et des seconds moyens (43, 48) pour répéter l'activation du champ de contrôle d'acquittement d'au moins un bloc de la séquence émis après un bloc où le champ de contrôle d'acquittement a été activé par lesdits premiers moyens (44, 48).

11. Unité selon la revendication 10, dans laquelle lesdits premiers moyens (44) sont agencés pour activer à intervalles de temps réguliers le champ de contrôle d'acquittement de blocs de la séquence.

12. Unité selon la revendication 10 ou 11, dans laquelle lesdits seconds moyens (43) sont agencés pour activer le champ de contrôle d'acquittement de N blocs consécutifs de la séquence émis juste après ledit bloc où le champ de contrôle d'acquittement a été activé par lesdits premiers moyens (44), N étant un nombre au moins égal à 1.

13. Unité selon la revendication 12, dans laquelle N > 1 et lesdits N blocs sont émis vers l'unité réceptrice à intervalles de temps réguliers.

14. Unité selon la revendication 13, dans laquelle la durée pendant laquelle lesdits N blocs sont émis est sensiblement plus courte que les intervalles de temps entre les émissions de blocs où le champ de contrôle d'acquittement est activé par lesdits premiers moyens (44).

15. Unité selon l'une quelconque des revendications 10 à 14, comprenant en outre des moyens pour commander l'unité réceptrice de façon qu'après avoir reçu un premier bloc de la séquence ayant le champ de contrôle d'acquittement activé, l'unité réceptrice ne tienne pas compte de l'activation éventuelle du champ de contrôle d'acquittement d'un autre bloc de la séquence reçu dans une période de durée prédéterminée après ledit premier bloc.

16. Unité selon chacune des revendications 12 et 15, dans laquelle ladite durée prédéterminée correspond sensiblement à N fois un intervalle de temps séparant les émissions de deux blocs consécutifs de la séquence.

17. Unité selon l'une quelconque des revendications 10 à 14, comprenant en outre des moyens (46) pour commander l'unité réceptrice de façon qu'après avoir retourné des informations d'acquittement en réponse à la réception d'un premier bloc de la séquence ayant le champ de contrôle d'acquittement activé, l'unité réceptrice inhibe l'envoi d'informations d'acquittement dans une période de durée prédéterminée après ledit premier bloc.

18. Unité selon chacune des revendications 12 et 17, dans laquelle ladite durée prédéterminée correspond sensiblement à N fois un intervalle de temps séparant les émissions de deux blocs consécutifs de la séquence.
